(19)

**Europäisches Patentamt**

**European Patent Office**

**Office européen des brevets**

(11)  **EP 4 672 145 A2**

(12)  # EUROPEAN PATENT APPLICATION

(43) Date of publication:
**31.12.2025 Bulletin 2026/01**

(21) Application number: **25207217.8**

(22) Date of filing: **31.08.2023**

(51) International Patent Classification (IPC):
***G06T 7/292*** *(2017.01)*

(52) Cooperative Patent Classification (CPC):
**G06T 7/20; G06T 7/292;** G06T 2207/20081;
G06T 2207/20084; G06T 2207/30232;
G06T 2207/30241

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.09.2022 CN 202211101796**

(62) Document number(s) of the earlier application(s) in
accordance with Art. 76 EPC:
**23194429.9 / 4 336 445**

(71) Applicant: **Robert Bosch GmbH
70442 Stuttgart (DE)**

(72) Inventors:
• **ZHANG, Jiadi
Shanghai, 200335 (CN)**
• **WANG, Leichen
Shanghai, 200335 (CN)**

(74) Representative: **Isarpatent
Patent- und Rechtsanwälte Partg mbB
Friedrichstraße 31
80801 München (DE)**

Remarks:
•This application was filed on 07-10-2025 as a
divisional application to the application mentioned
under INID code 62.
•Claims filed after the date of filing of the application /
after the date of receipt of the divisional application
(Rule 68(4) EPC).

(54)  **MULTI-OBJECT TRACKING SYSTEM AND ITS MOTION TRAJECTORY OPTIMIZATION APPARATUS AND OPTIMIZATION METHOD**

(57)    The present invention provides a multi-object tracking system and its motion trajectory optimization apparatus and optimization method. The motion trajectory optimization apparatus comprises: an acquisition module configured to acquire target object data from sensors perceiving multiple target objects; a tracking module configured to track the target object data to obtain multiple motion trajectories of the multiple target objects, each motion trajectory including multiple detection results of a target object at multiple moments; and an optimization module configured to perform at least one of the following optimizations on the multiple motion trajectories: -optimizing motion trajectories containing potential global outlier detection results; -optimizing motion trajectories containing potential local outlier detection results; -optimizing motion trajectories containing inconsistent geometric parameters; and -optimizing motion trajectories containing potential ID-switching trajectory segments.

Fig. 1

EP 4 672 145 A2

## Description

## Technical Field

The present invention generally relates to the technical field of multi-object tracking, particularly to a multi-object tracking system and its motion trajectory optimization apparatus and optimization method. It also relates to a corresponding machine-readable storage medium.

## Background Art

The primary task of Multi-Object Tracking (MOT) technology is to detect multiple target objects in an environment and associate the detected target objects with motion trajectories. Multi-object tracking technology finds wide application in areas such as traffic management, security monitoring, autonomous driving, and robotics.

Existing multi-object tracking technology typically employs data association to correlate data from the same target object and obtain motion trajectories for each target object. Data processing includes online and offline methods. Online data processing often uses a high filtering threshold to eliminate noise data. However, this poses the risk of losing useful information, leading to inaccurate and non-robust target object motion trajectories. Offline data processing involves processing all sensor data without setting any filtering thresholds, which can be computationally complex, inefficient, and unable to yield accurate and robust target object motion trajectories.

## Summary of the Invention:

In view of the above, the present invention provides a motion trajectory optimization solution for a multi-object tracking system, capable of optimizing multiple motion trajectories of multiple target objects obtained from multi-object tracking.

According to one aspect of the present invention, a motion trajectory optimization apparatus for a multi-object tracking system is provided. The apparatus includes: an acquisition module configured to acquire target object data from sensors perceiving multiple target objects; a tracking module configured to track the target object data to obtain multiple motion trajectories for the multiple target objects. Each motion trajectory includes multiple detection results of a target object at various instances. Each detection result includes the ID of the target object, detection timestamp, and multiple feature parameters. The multiple feature parameters comprise one or more motion parameters and one or more geometric parameters. Additionally, an optimization module is configured to perform at least one optimization on the multiple motion trajectories, including:

- optimization for motion trajectories containing potential global outlier detection results.
- optimization for motion trajectories containing potential local outlier detection results, where the degree of deviation of local outlier detection results from the motion trajectory is less than that of global outlier detection results.
- optimization for motion trajectories containing inconsistent geometric parameters.
- optimization for motion trajectories containing potential ID-switching trajectory segments.

According to another aspect of the present invention, a multi-object tracking system is provided. The system includes: a perception device comprising one or more sensors for perceiving multiple target objects and outputting target object data; and the aforementioned motion trajectory optimization apparatus, communicatively connected to the perception device, for tracking the target object data to obtain multiple motion trajectories for the multiple target objects and optimizing the obtained multiple motion trajectories.

According to yet another aspect of the present invention, a motion trajectory optimization method for a multi-object tracking system is provided. Optionally, the method is executed by the aforementioned optimization apparatus or the aforementioned multi-object tracking system. The method includes: acquiring target object data containing multiple target objects perceived by sensors; tracking the target object data to obtain multiple motion trajectories for the multiple target objects. Each motion trajectory includes multiple detection results of a target object at various instances. Each detection result includes the ID of the target object, detection timestamp, and multiple feature parameters. The multiple feature parameters comprise one or more motion parameters and one or more geometric parameters. Additionally, the method involves performing at least one optimization on the multiple motion trajectories, including:

- optimization for motion trajectories containing potential global outlier detection results.
- optimization for motion trajectories containing potential local outlier detection results, where the degree of deviation of local outlier detection results from the motion trajectory is less than that of global outlier detection results.
- optimization for motion trajectories containing inconsistent geometric parameters.
- optimization for motion trajectories containing potential ID-switching trajectory segments.

According to yet another aspect of the present invention, a machine-readable storage medium is provided. The storage medium stores executable instructions that, when executed, cause one or more processors to perform the aforementioned motion trajectory optimization method.

The above has provided a general overview of the main aspects of the present invention, to provide a basic understanding of these aspects, serving as an introduction to the detailed description that follows.

**Brief Description of the Drawings**

The present invention relates to an illustration description. The following detailed description in conjunction with the accompanying drawings will make the technical solution of the present invention clearer. It should be understood that these drawings are for illustrative purposes only and are not intended to limit the scope of the present invention.

FIG. 1 is a schematic diagram of a multi-object tracking system according to an example of the present invention, including a motion trajectory optimization apparatus according to an example of the present invention.
FIG. 2 is a flowchart illustrating a motion trajectory optimization process according to an example of the present invention.
FIGS. 3A-3D illustrate examples of motion trajectories to be optimized.
FIG. 4 is a flowchart illustrating a trajectory optimization process for motion trajectories containing global outlier detection results according to an example of the present invention.
FIG. 5 is a flowchart illustrating a trajectory optimization process for motion trajectories containing local outlier detection results according to an example of the present invention.
FIG. 6 conceptually shows an application example of the trajectory optimization process in FIG. 5.
FIG. 7 is a flowchart illustrating a trajectory optimization process for motion trajectories containing inconsistent geometric parameters according to an example of the present invention.
FIG. 8 conceptually shows an application example of the trajectory optimization process in FIG. 7.
FIG. 9 is a flowchart illustrating a trajectory optimization process for motion trajectories containing ID-switching trajectory segments according to an example of the present invention.
FIG. 10 conceptually shows an application example of the trajectory optimization process in FIG. 9.
FIG. 11 is a flowchart illustrating a motion trajectory optimization method for a multi-object tracking system according to an example of the present invention.

**Specific Embodiments**

The specific embodiments of the present invention are described below with reference to the accompanying drawings.

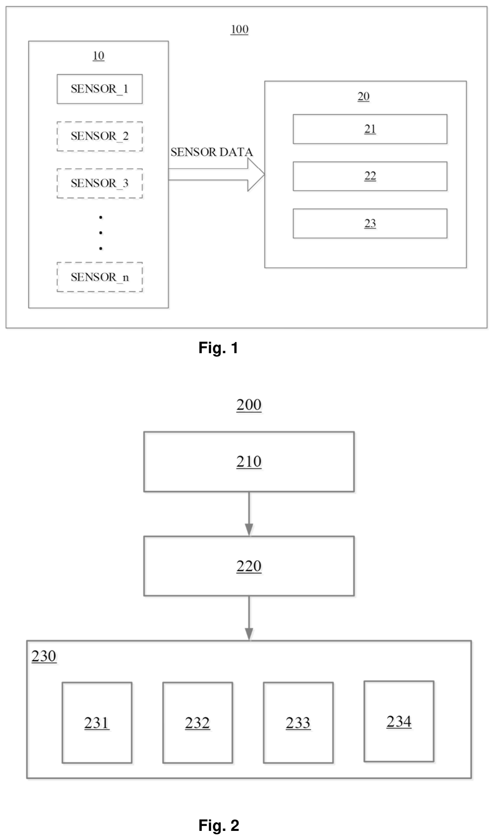

FIG. 1 schematically illustrates a multi-object tracking system 100 according to an example of the present invention, comprising a perception device 10 and a motion trajectory optimization apparatus 20 (referred to as "optimization apparatus 20" hereinafter).

Referring to FIG. 1, the perception device 10 includes one or more sensors (SENSOR_1, SENSOR_2, SENSOR_3... SENSOR_n) for detecting/perceiving multiple target objects in the environment and outputting target object data (SENSOR DATA). The multiple target objects in the environment can include static target objects (e.g., buildings, plants, obstacles on the road, etc.) as well as dynamic target objects (e.g., moving vehicles, pedestrians or pets in motion, etc.). Embodiments of the present invention involve tracking dynamic multiple target objects, obtaining their motion trajectories, and optimizing the motion trajectories. It should be understood that "dynamic multiple target objects" herein refer to target objects having different positions at different times, i.e., these target objects are in motion.

One or more sensors are used to capture the 3D information of the target objects in the environment (e.g., 3D positions, 3D dimensions, velocity, acceleration, angular velocity, and angular acceleration). One or more sensors may include cameras and/or lidar sensors.

The optimization apparatus 20 is communicatively connected to the perception device 10 via wired and/or wireless means to obtain target object data from the perception device 10. The optimization apparatus processes the target object data to obtain optimized motion trajectories of the target objects.

The optimization apparatus 20 and the perception device 10 can be located and configured according to specific application scenarios. For example, in a case where examples of the present invention are applied in a traffic scenario, multiple target objects may include multiple traffic participants, such as multiple moving vehicles. The perception device 10 can include one or more vehicle-mounted sensors and/or one or more roadside sensors. The optimization apparatus 20 can be located in the vehicle's ECU, roadside units, or cloud servers. For example, in a case where examples of the present invention are applied to robots operating in a factory environment, multiple target objects may include multiple mobile delivery trucks in the factory environment. The perception device 10 can include one or more sensors installed on the robot. The optimization apparatus 20 can be located in the robot's controller, central controller in the factory environment, or edge server.

With continued reference to FIG. 1, the optimization apparatus 20 may include an acquisition module 21, a tracking module 22, and an optimization module 23. The optimization apparatus 20 and its modules can be implemented using hardware, software, or a combination of both. Hardware implementation can be done using one or more dedicated integrated circuits (ASICs), digital signal processors (DSPs), data signal processing devices (DSPDs), programmable logic devices (PLDs), field-programmable gate arrays (FPGAs), processors, controllers, microcontrollers, microprocessors, electronic units designed to perform their functions, or combinations thereof. For software implementation, microcode, program code, or code segments can be utilized, stored in machine-readable storage media such as storage components.

It should be understood that the naming of multiple modules within the optimization apparatus 20 is functional and not intended to limit their physical locations or implementations. For example, these modules can be located on the same chip or circuit, or they can be distributed across different chips or circuits.

In one example, the optimization apparatus 20 is implemented to include memory and a processor. The memory stores instructions that, when executed by the processor, implement the trajectory optimization method according to the examples of the present invention.

FIG. 2 illustrates a motion trajectory processing process 200 according to one embodiment of the present invention. The process 200 can be implemented by the aforementioned optimization apparatus 20 or the aforementioned system 100, as the descriptions above about the optimization apparatus 20 and system 100 are equally applicable here.

Referring to FIG. 2, in block 210, acquisition module 21 acquires target object data, which includes multiple target objects sensed by one or more sensors.

In block 220, tracking module 22 tracks the acquired target object data to obtain multiple motion trajectories of multiple target objects (in the subsequent description, motion trajectories may be referred to as "trajectories"). The tracked target object data includes associating data from the same target object.

Each motion trajectory includes multiple detection results of the target object at multiple time instances. These time instances can include equidistant or non-equidistant time instances. Each detection result comprises: the ID of the target object (i.e., a unique identifier for the target object), detection timestamp (i.e., the moment of detection), and multiple feature parameters of the target object. These feature parameters include one or more motion parameters (such as motion speed and acceleration in the x, y, and z directions) and one or more geometric parameters (such as length, width, and height). Each detection result may also include a perception confidence level indicating the reliability of sensor perception performance, which is derived based on the sensing capabilities of the sensor. Higher perception confidence levels indicates higher credibility in perception for that detection result. This perception confidence level is included in the target object data, and the present invention does not limit how this perception confidence level is obtained.

In one example, feature parameters including motion and geometric parameters can be represented using a 3D model of the target object. This 3D model may include a kinematic model and a geometric model. For instance, the kinematic model may employ quadratic motion models such as Constant Turn Rate and Velocity (CTRV) or Constant Turn Rate and Acceleration (CTRA), or linear motion models such as Constant Velocity (CV) and Constant Acceleration (CA). The geometric model contains 3D information describing the shape of the target object, like its length, width, and height.

In one example, the 3D model can be represented as follows:

$$M=[x, y, z, l, w, h, V_x, V_y, \psi, \omega, \alpha]$$

where M represents the 3D model;
x, y, and z represent the position of the target object on the x, y, and z axes;
l, w, and h represent the length, width, and height of the target object;
$V_x$ and $V_y$ represent the motion speed of the target object along the x and y axes;
$\psi$ represents the motion direction of the target object;
$\omega$ represents the yaw angle of the target object;
$\alpha$ represents the acceleration of the target object.

This example of the 3D model is particularly suitable for vehicles traveling on roads. For other types of target objects in different scenarios, the 3D model can be adaptively adjusted, for example, by adding a vertical motion speed Vz or omitting the yaw angle parameter $\omega$.

In block 230, optimization module 23 performs at least one optimization on multiple motion trajectories, including:

- optimization for motion trajectories containing potential global outliers (block 231);
- optimization for motion trajectories containing potential local outliers (block 232), where local outlier detection results deviate from the motion trajectory to a lesser extent than global outlier detection results;
- optimization for motion trajectories containing inconsistent geometric parameters (block 233); and
- optimization for motion trajectories containing potential ID-switching trajectory segments (block 234).

For multiple motion trajectories obtained through multi-object tracking, the ideal situation is that each trajectory contains detection results with only one target object ID, where each detection result on the trajectory is highly similar, the trajectory is continuous, and the geometric parameters in each detection result on the trajectory are the same. This is because a target object does not disappear abruptly, size changes should not occur, adjacent time instances should have similar motion states, and the trajectory of one or more other target objects should not be present in the motion trajectory. It can be understood that extreme cases might occur, such as collision deformation of the target object or sudden removal, where the motion trajectory might not conform to the above rules. The examples of the present invention do not encompass such extreme scenarios.

In practical detection, target objects may be temporarily or frequently occluded, which, from the perspective of sensor perception, results in the target object "disappearing" from the target object data and reappearing. This can lead to the following issues in tracked motion trajectories: detection results deviate to varying degrees from the trajectory (i.e., global outlier detection results or local outlier detection results), and segments of other target objects' trajectories are included in the trajectory (i.e., ID-switching trajectory segments). Additionally, sensors exhibit different detection accuracies for target objects at varying distances, leading to the following issues in tracked motion trajectories: inconsistent geometric parameters in multiple detection results of the same trajectory. When one or more of these issues are present in a motion trajectory, the trajectory can be optimized according to the optimization strategy of the present invention.

In examples of the present invention, a global outlier detection result refers to a detection result where two or more feature parameters in its multiple feature parameters deviate as "outliers," i.e., they deviate from corresponding two or more feature parameters of other detection results on the trajectory. In other words, global outlier detection results refer to those detection results that deviate significantly from the trajectory. For example, a situation of global outlier detection results could be when two or more parameters in the above 3D model are "outliers," or when every parameter in the above 3D model is an "outlier."

In examples of the present invention, a local outlier detection result refers to a detection result where one feature parameter in its multiple feature parameters deviates as an "outlier," i.e., it deviates from a corresponding feature parameter of other detection results on the trajectory. In other words, local outlier detection results refer to those detection results that deviate to a lesser extent from the trajectory. For example, a situation of local outlier detection results could be when one parameter in the above 3D model is an "outlier."

It can be understood that in examples of the present invention, "outlier" encompasses the meaning of isolation, novelty, and deviation. In this invention, these different ways of measurement or different naming of deviations are collectively referred to as outliers.

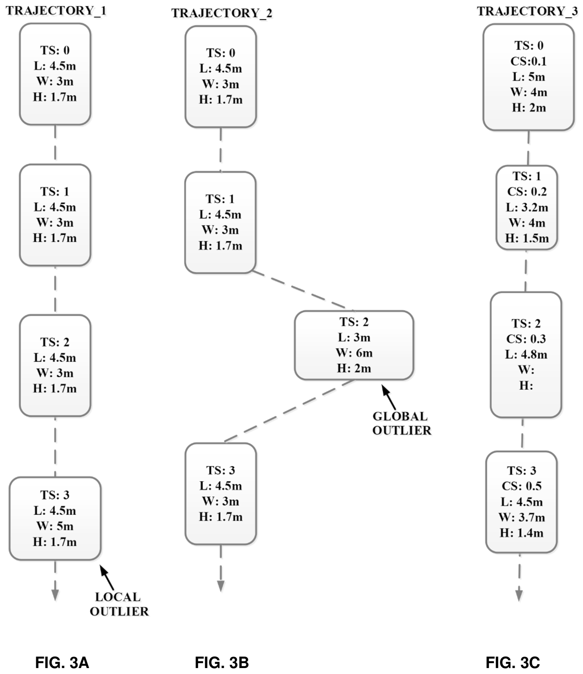

For clarity, examples of motion trajectories to be optimized are illustrated in FIGS. 3A-3D.

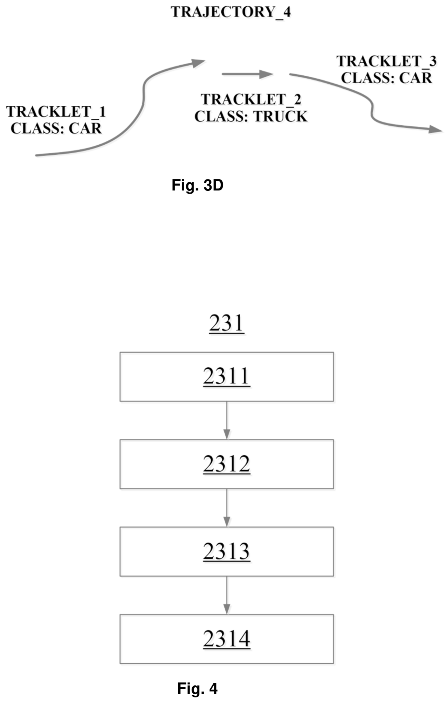

FIG. 3A illustrates an example of a motion trajectory (TRAJECTORY_1) containing local outlier detection results. In FIG. 3A, TS (Tracking Second) refers to the detection timestamp; L refers to the length of the target object; W refers to the width of the target object; H refers to the height of the target object. Referring to FIG. 3, the length, width, and height are the same in the detection results at 0 seconds, 1 second, and 2 seconds. In the detection result at 3 seconds, the width is different from the widths in other detection results. Therefore, the detection result at 3 seconds is a local outlier detection result.

FIG. 3B illustrates an example of a motion trajectory (TRAJECTORY_2) containing global outlier detection results. In FIG. 3B, the same symbols as in FIG. 3A represent the same meanings. Referring to FIG. 3B, the length, width, and height are the same in the detection results at 0 seconds, 1 second, and 3 seconds. In the detection result at 2 seconds, all three feature parameters (length, width, and height) are different from those in other detection results. Therefore, the detection result at 2 seconds is a global outlier detection result.

FIG. 3C illustrates an example of a motion trajectory (TRAJECTORY_3) containing inconsistent geometric parameters in the detection results. In FIG. 3C, the same symbols as in FIG. 3A represent the same meanings. Additionally, CS (Sensing Confidence Score) represents the position confidence score to be introduced later. Referring to FIG. 3, the length, width, and height are all different in the detection results at 0 seconds, 1 second, 2 seconds, and 3 seconds. The width and height information are missing in the detection result at 2 seconds.

FIG. 3D illustrates an example of a motion trajectory (TRAJECTORY_4) containing ID-switched trajectory segments. Referring to FIG. 3D, the target objects in trajectory segments 1 (TRACKLET_1) and 3 (TRACKLET_3) are both cars (CAR), while the target object in trajectory segment 2 (TRACKLET_2) is a truck (TRUCK). Therefore, this motion trajectory contains trajectory segments with ID-switches, specifically, trajectory segment 2.

The following introduces the above trajectory optimization with reference to FIG. 4 to 10.

FIG. 4 illustrates an implementation of trajectory optimization for motion trajectories containing global outlier detection results, namely, an implementation of Box 231.

Referring to FIG. 4, in Box 2311, for each motion trajectory, multiple feature parameters (both motion and geometric parameters) from each detection result are collectively taken as samples. The distance between the multiple parameters in this detection result and those in other detection results is calculated as a sample-to-sample distance, for instance, using Mahalanobis distance or Euclidean distance, to obtain inter-sample distances. In other words, deviations of the overall motion and geometric parameters are computed, such as deviations in the length, width, height, lateral and longitudinal velocity of the target object.

In Box 2312, the self-supervised global outlier detection network model is trained based on the calculated inter-sample distances to obtain global implicit features. These global implicit features represent the degree of similarity between the multiple feature parameters of a detection result in a motion trajectory and those of other detection results, on an overall level. This degree of similarity can be represented in various forms, such as binary values like 1 or 0, metric values like Euclidean distance, or probabilistic values like percentages.

Using a self-supervised learning model has advantages, such as not requiring labeled sample data for training. By mining the intrinsic features of the data, relationships (such as similarity) between samples are discovered. This reduces the extensive work of manual labeling and avoids issues of incorrect ground truth labels that may arise during the manual labeling process.

In Box 2313, the global outlier detection results on the motion trajectory are determined based on the obtained global implicit features.

In one example, the obtained global implicit features and all detection results of the trajectory are input to the global outlier detection classifier (referred to as the "global classifier") to output classification results. This categorizes all detection results into two classes: global outlier detection results and non-global outlier detection results. In this way, each test result can be obtained as a global outlier detection results or a non-global outlier detection results. For instance, the output of the global classifier includes two classes: positive and negative. Positive represents potential global outlier detection results, while negative represents non-global outlier detection results. Conversely, using negative to represent potential global outlier detection results and positive to represent non-global outlier detection results is also feasible.

The global classifier can be a trained Supervised Learning Model with the ability to classify input detection results into global or non-global outlier detection results based on global implicit features.

In one example, the implementation of Boxes 2311-2313 can follow these steps. First, each detection result's multiple feature parameters are taken as a sample feature $x(t)$, and nonlinear encoding is applied to obtain encoded feature $z(t)$. Here, $x(t)$ is considered a positive sample feature. Next, self-regressive processing is performed on feature $z(t)$ (for example, predicting the current feature based on the previous moment's feature and iterating in this manner) to obtain trajectory feature $c(t)$. $c(t)$ can be understood as a high-dimensional feature describing the trajectory in the time domain. Subsequently, a noise function $f(n)$ is added to the positive sample feature $x(t)$ to compute $x(t) + f(n)$ and obtain the negative sample feature $y(t)$. Calculating the negative sample feature can be understood as adding a disturbance $f(n)$ to the positive sample feature $x(t)$ to obtain the negative sample feature $y(t)$. Then, the self-supervised global outlier detection network model is trained using the positive sample feature $x(t)$, the negative sample feature $y(t)$, and the trajectory feature $c(t)$ to obtain the degree of similarity between $x(t)$ and $c(t)$. This degree of similarity represents the degree of similarity on an overall level between the multiple feature parameters of a detection result in a motion trajectory and the corresponding multiple feature parameters of other detection results in the same trajectory. Training the self-supervised global outlier detection network model can include sampling the distance between the positive sample feature $x(t)$ and the trajectory feature $c(t)$ and the distance between the negative sample feature $y(t)$ and the trajectory feature $c(t)$. In one example, training the self-supervised global outlier detection network model can involve optimizing the loss function to minimize its value. The loss function includes the calculated distances between the positive sample feature $x(t)$ and the trajectory feature $c(t)$ and between the negative sample feature $y(t)$ and the trajectory feature $c(t)$. Then, the obtained degree of similarity is compared to a predetermined global degree of similarity threshold. If the obtained degree of similarity is less than the global degree of similarity threshold, the detection result is determined as a global outlier detection result. If the obtained degree of similarity is greater than or equal to the global degree of similarity threshold, the detection result is determined as a non-global outlier detection result.

In Box 2314, the predicted smoothing values are used to replace the multiple feature parameters in the global outlier detection results.

In one example, the multiple parameters of the determined global outlier detection results are all set to default values (e.g., all parameters in the multiple parameters are set to zero). Then, a smoothing algorithm is used to predict the smoothing values of these multiple parameters. That is, the predicted reasonable values of these multiple parameters at the detection time of the global outlier detection results are generated using the smoothing algorithm. The smoothing algorithm encompasses various methods, such as fixed-point smoothing, fixed-lag smoothing, or fixed-interval smoothing. The smoothing algorithm can also employ linear interpolation, where the current time's interpolated mean is calculated based on the values of the preceding and succeeding time instances. Here, the term "smoothing values" can be understood as parameter values that are closer to the trajectory compared to the "deviated" parameters. For example, when velocity parameters and acceleration parameters are deviated parameters in the global outlier detection results, the smoothing value for the deviated velocity parameter is closer to the velocity parameter values in other detection results within the trajectory; similarly, for the deviated acceleration parameter, the smoothing value is closer to the acceleration parameter values in other detection results within the trajectory.

Through the aforementioned process, potential global outlier detection results contained within the trajectory can be detected. Moreover, these global outlier detection results can be eliminated from the trajectory, and the predicted smoothing values can be employed to update these global outlier detection results. As a result, in situations where the global outlier detection results significantly deviate from the trajectory in the motion trajectory, the motion trajectory can be effectively optimized.

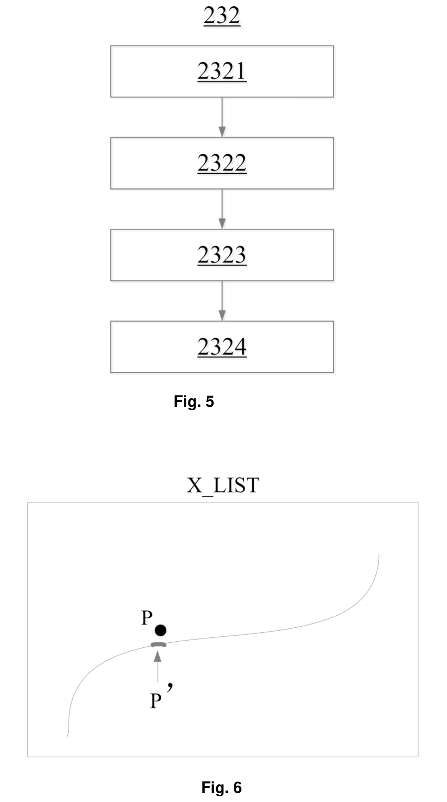

The present disclosure provides an embodiment of trajectory optimization for motion trajectories containing local outlier detection results, as illustrated in FIG. 5, which represents an implementation of box 232.

Referring to FIG. 5, in box 2321, for each motion trajectory, each feature parameter from multiple feature parameters in each detection result (i.e., each feature parameter from motion and geometric parameters) is treated individually as a sample. The distance between the corresponding feature parameter in each detection result and the same feature parameter in other detection results is calculated, using methods such as Mahalanobis distance or Euclidean distance, to obtain inter-sample distances. In other words, the deviation of each parameter from motion and geometric parameters is computed individually. For example, the separate deviations of the length, height, or width of the target object are calculated.

In box 2322, the self-supervised local outlier detection network model is trained based on the computed distances to obtain local implicit features. These features represent the degree of similarity between a feature parameter in a detection result and the corresponding feature parameter in other detection results on the same trajectory. It's worth noting that this degree of similarity is based on the degree of similarity of individual feature parameters, whereas the degree of similarity in box 2312 is based on multiple feature parameters.

Similar to the descriptions above, the use of a Self-supervised Learning Module is advantageous, eliminating the need to label training samples and instead discovering relationships (e.g., similarity) between samples by mining their inherent features. This approach saves significant labeling efforts and avoids errors introduced by incorrect Ground Truth labels during the manual labeling process.

In box 2323, the obtained local implicit features are used to identify local outlier detection results on the motion trajectory, along with the outlier feature parameter responsible for the deviation. For example, within multiple parameters containing motion and geometric features, the parameter causing the deviation, such as length, is determined.

In one example, the obtained local implicit features and all detection results of the trajectory are fed into a local outlier detection classifier (referred to as "local classifier") to obtain classification results. This categorizes all detection results into two classes: local outlier detection results and non-local outlier detection results. Thus, each detection result is classified as either local or non-local outlier detection result. For example, the output of the local classifier includes two classes: positive and negative, where positive indicates potential local outlier detection results and negative indicates non-local outlier detection results. Alternatively, using negative to represent potential local outlier detection results and positive for non-local outlier detection results is also valid.

The local classifier can be a trained Supervised Learning Module, capable of classifying input detection results into local or non-local outlier detection results based on local implicit features. When the output classifies as a local outlier detection result, it can also identify the outlier feature parameter.

Similar to the examples of boxes 2311-2313, in one implementation, boxes 2321-2323 can be realized through the following steps. Firstly, each feature parameter of every detection result is treated as a sample feature $x(t)$ and non-linearly encoded to obtain encoded feature $z(t)$, considering $x(t)$ as positive sample features. Next, self-autoregressive processing is applied to $z(t)$, predicting the current feature using the previous moment's feature iteratively to obtain trajectory feature $c(t)$. $c(t)$ can be understood as high-dimensional temporal features describing the trajectory. Then, a noise function $f(n)$ is added to positive sample feature $x(t)$, i.e., computing $x(t) + f(n)$, to obtain negative sample feature $y(t)$. The computation of negative sample feature can be understood as perturbing positive sample feature $x(t)$ with disturbance $f(n)$ to obtain negative sample feature $y(t)$. Subsequently, training of the self-supervised local outlier detection network model is carried out using positive sample feature $x(t)$, negative sample feature $y(t)$, and trajectory feature $c(t)$ to obtain the degree of similarity between $x(t)$ and $c(t)$. This degree of similarity represents the degree of similarity between a feature parameter in a detection result of a motion trajectory and the corresponding feature parameter in other detection results of the same trajectory. Training of the self-supervised local outlier detection network model can involve, for example, computing the distances between positive sample feature $x(t)$ and trajectory feature $c(t)$ as well as between negative sample feature $y(t)$ and trajectory feature $c(t)$. In one example, training of the self-supervised local outlier detection network model can involve optimizing a loss function to minimize its value, where the loss function includes computed distances between positive sample feature $x(t)$ and trajectory feature $c(t)$ as well as between negative sample feature $y(t)$ and trajectory feature $c(t)$. Subsequently, the obtained degree of similarity is compared with a predetermined local degree of similarity threshold. If the obtained degree of similarity is less than the local degree of similarity threshold, the detection result is determined as a local outlier detection result; if the obtained degree of similarity is greater than or equal to the local degree of similarity threshold, the detection result is determined as a non-local outlier detection result.

In box 2324, the predicted smooth value is employed to replace one outlier feature parameter from the local outlier detection results.

In one example, the deviating parameter from the determined local outlier detection results is set to a default value (e.g., set to zero). Then, a smoothing algorithm is utilized to predict the smooth value of that parameter. In other words, the reasonable value of that parameter at the detection moment of the local outlier detection results is predicted. The smoothing algorithm encompasses various approaches, such as fixed-point smoothing, fixed-lag smoothing, or fixed-interval smoothing. The smoothing algorithm can also incorporate linear interpolation, which computes the current moment's interpolated mean value based on the values of the previous and subsequent moments.

Through the aforementioned process, potential local outlier detection results contained within trajectories can be detected. These local outlier detection results can be removed from the trajectory and updated using the predicted smooth value. Consequently, in cases where the motion trajectory includes local outlier detection results with minor deviations from the trajectory, the motion trajectory can be effectively optimized.

FIG. 6 illustrates an exemplary application of the aforementioned optimization process 232. In FIG. 6, the curve represents the change of the target object's position in the X-direction over time, and point P represents the determined local outlier point (i.e., the outlier point corresponding to the local outlier detection result) whose deviation is caused by the deviation of the position parameter in the X-direction. The smooth value at the moment of P is predicted using the smoothing algorithm, resulting in point P'. As a result, point P is removed, and point P' is integrated into the curve, completing the trajectory optimization for the motion trajectory containing local outlier points. It will be understood that FIG. 6 depicts an example related to the position parameter in the X-direction, and a similar application of optimization process 232 can be applied to other parameters such as the position parameters in the Y-direction, Z-direction, angles, angular velocity, angular acceleration, and so forth. This is not elaborated upon here.

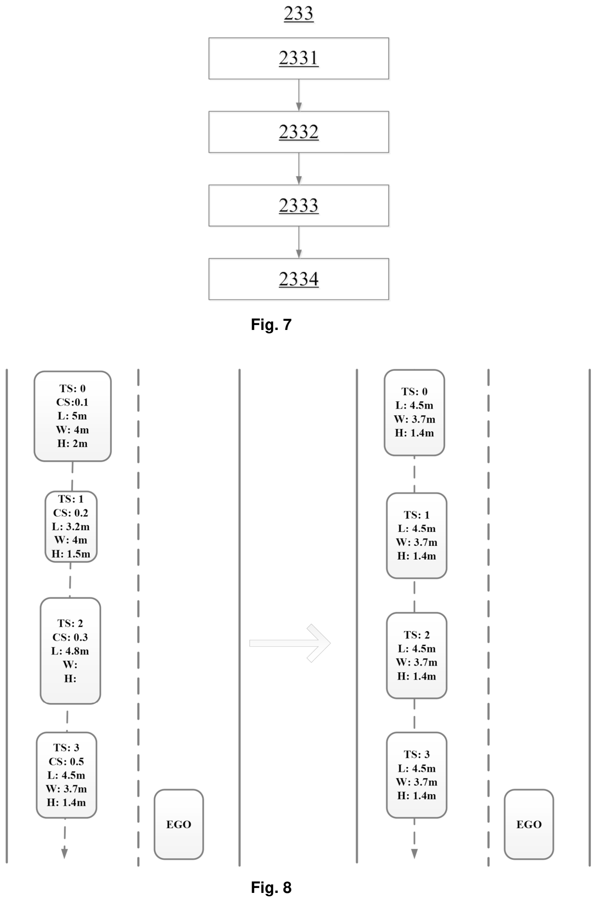

FIG. 7 illustrates one implementation of trajectory optimization for motion trajectories containing inconsistent geometric parameters, i.e., one implementation of box 233.

Referring to FIG. 7, in box 2331, distance confidences are set for each detection result on the motion trajectory. This distance confidence level indicates the credibility of the detection result based on distance factors.

The closer the distance between the target object and the sensor, the higher the distance confidence is set. Conversely, the farther the distance between the target object and the sensor, the lower the distance confidence is set. This setting is due to the variation in the accuracy of detection results with the change in relative distance between the target object and the sensor. The closer the distance between the target object and the sensor, the higher the accuracy of the detection result should be from a positional perspective. Therefore, the credibility based on distance factors should be higher. Distance confidence can be represented in various forms, such as scores, multiple levels, or percentages, etc.

In box 2332, the total confidence level of each detection result is calculated based on the distance confidence and perception confidence for each detection result.

In one example, both confidence levels are normalized separately and then multiplied, added, or subjected to a weighted average to calculate the total confidence level.

In box 2333, the optimal geometric parameters for the motion trajectory are determined based on the calculated total confidence level.

In one example, the geometric parameters from the detection result with the highest total confidence level are determined as the optimal geometric parameters for the trajectory.

In another example, the optimal geometric parameters for the trajectory are calculated based on the geometric parameters and their total confidence level from each detection result on the trajectory. For example, the optimal geometric parameters can be calculated as the weighted average of the geometric parameters and total confidence level from the detection results on the trajectory.

In box 2334, the geometric parameters in each detection result on the trajectory are replaced with the optimal geometric parameters.

Through the above process, inconsistent geometric parameters can be present in multiple detection results on the motion trajectory, such as cases involving size errors. The optimal geometric parameters are calculated, and these are employed to optimize the motion trajectory.

FIG. 8 illustrates an application example of the optimization process 233 described above. The scenario in FIG. 8 pertains to a traffic scene. The optimization apparatus 20 is set on the ego vehicle (EGO). The target objects are vehicles in adjacent lanes. The motion trajectory includes multiple detection results of the vehicle at various moments. FIG. 8 shows the optimization result of the trajectory depicted in FIG. 3C. The left trajectory in FIG. 8 represents the initial trajectory to be optimized, while the right trajectory represents the trajectory after optimization. As shown in FIG. 8, at 0 seconds, the distance between the vehicle in the adjacent lane and the ego vehicle is maximum. At 3 seconds, this distance is minimum. Therefore, based on the distance factor, position confidences are successively increased for the detection results at 0 seconds, 1 second, 2 seconds, and 3 seconds, i.e., 0.1, 0.2, 0.3, and 0.5, respectively. Then, using the above optimization calculation, the optimal size of the vehicle is determined, resulting in the optimized trajectory shown in the right part of FIG. 8.

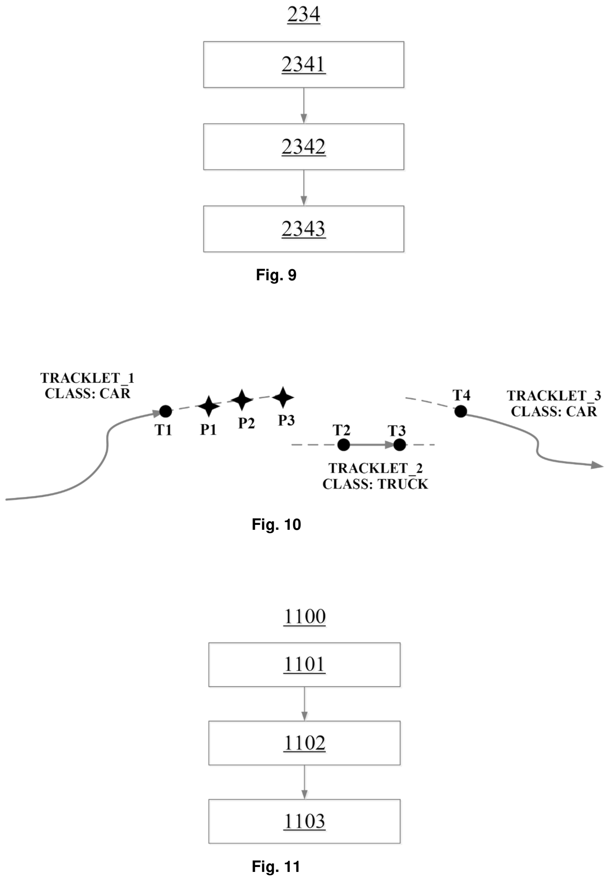

FIG. 9 illustrates one implementation of trajectory optimization for motion trajectories containing ID-switching trajectory segments, i.e., one implementation of box 234.

Referring to FIG. 9, in box 2341, the presence of non-continuous trajectory segments in the motion trajectory is determined to identify if the trajectory contains ID-switching trajectory segments. Non-continuous trajectory segments correspond to ID-switching trajectory segments.

In box 2342, effective merged trajectory segments are calculated based on one or multiple motion parameters from detection results at at least one endpoint of the non-continuous trajectory segment.

In one example, calculating effective merged trajectory segments involves the following steps: Initially, using a constant velocity motion model or constant acceleration motion model, the trajectory is extended from at least one endpoint (assuming the target object is moving at constant velocity or constant acceleration, predicting the object's position in subsequent moments), resulting in multiple predicted points corresponding to multiple detection moments. Then, the merging degree of similarity between each predicted point and the at least one endpoint is computed. This merging degree of similarity can be derived from three aspects of similarity:

(1) Motion similarity between two points, higher when the motion states between two points are closer.
(2) Geometric similarity between two points, higher when the geometric states between two points are closer.
(3) Object type similarity between two points, higher when the object types between two points are closer. For example, the object type similarity between a car and a truck is higher than between a car and a pedestrian.

The sum or average of these three aspects of similarity is computed as the merging similarity between two points. Predicted points with merging similarity greater than a predetermined merging threshold are considered effective merging points. Connecting at least one endpoint with the determined effective merging points results in effective merged trajectory segments.

In box 2343, the non-continuous trajectory segments are replaced with the effective merged trajectory segments, obtaining a continuous motion trajectory with only a single target object ID.

Through the above process, in cases where the motion trajectory contains ID-switching trajectory segments, effective merged trajectory segments can replace these segments, thereby optimizing the motion trajectory.

FIG. 10 illustrates an application example of the above-mentioned optimization process 234. FIG. 10 shows the optimization results of the trajectory to be optimized in FIG. 3D. Referring to FIG. 10, this trajectory contains non-continuous trajectory segments, namely, ID-switching trajectory segments, denoted as TRACKLET _2. This trajectory contains four endpoints that can be used for trajectory extension, namely, T1-T4. Taking the extension from the endpoint T1 as an example, other endpoints may perform similar processing. based on the motion model at T1 (e.g., constant velocity model), trajectory extension is performed to obtain predicted points P1-P3. Then, the merging similarity between endpoint T1 and each of the predicted points P1-P3 is calculated. If the calculated merging similarity between T1 and P2 is greater than the merging threshold, T1, P2, and T4 are connected to obtain an effectively merged trajectory segment. The trajectory segment TRACKLET_2 is removed from this trajectory, and the merged trajectory segment is connected to this non-continuous portion to obtain the optimized trajectory. It can be understood that FIG. 10 shows an example of extension from T1, and according to examples of the present invention, extension from one or more endpoints among T1-T4 can be performed, and the process is similar to the above-described process, which is not repeated here.

The trajectory optimization processing according to examples of the present invention can be implemented as offline processing, and it is advantageous to implement it as offline processing. For example, offline processing can handle historical data, save the computational power of real-time processing chips, and eliminate strict requirements on processing speed (e.g., real-time processing may require processing a set of data within a certain duration).

Here, "offline processing" can be understood as non-real-time processing, i.e., processing that is not performed simultaneously with the sensor's perception of target objects. For example, sensor-generated target object data can be stored in a memory (not shown), and then the target object data can be retrieved from the memory periodically or based on user requests or triggering signals for offline processing.

FIG. 11 illustrates a motion trajectory optimization method 1100 according to an example of the present invention. This method can be executed by the above-mentioned optimization apparatus 20 or system 100, so the descriptions above about the optimization apparatus and system 100 are equally applicable here and are not repeated.

Referring to FIG. 11, in step 1101, target object data from sensors perceiving multiple target objects are obtained.

In step 1102, the target object data is tracked to obtain multiple motion trajectories of the multiple target objects. Each motion trajectory includes multiple detection results of a target object at multiple time instances. Each detection result includes: the ID of the target object, detection timestamp, and multiple feature parameters. The multiple feature parameters include one or more motion parameters and one or more geometric parameters.

In step 1103, the following optimizations are performed on the multiple motion trajectories:

- optimization for motion trajectories containing potential global outlier detection results;

- optimization for motion trajectories containing potential local outlier detection results, wherein the extent of deviation of local outlier detection results from the motion trajectory is smaller than the extent of deviation of global outlier detection results from the same motion trajectory;
- optimization for motion trajectories containing inconsistent geometric parameters; and
- optimization for motion trajectories containing potential ID-switching trajectory segments.

The present invention also provides a machine-readable storage medium storing executable instructions that, when executed, cause one or more processors to perform the method 1100 as described above.

It should be understood that all operations described in the methods above are merely exemplary, and the present invention is not limited to any particular operation or the order of these operations in the methods, but should encompass all other equivalent transformations within the same or similar concepts.

It should be understood that processors can be implemented using electronic hardware, computer software, or any combination thereof. Whether these processors are implemented as hardware or software will depend on the specific application and overall design constraints imposed on the system. As an example, the processors, any portions thereof, or any combinations of the processors provided herein can be implemented as microprocessors, microcontrollers, digital signal processors (DSPs), field-programmable gate arrays (FPGAs), programmable logic devices (PLDs), state machines, gate logic, discrete hardware circuits, and other suitable processing components configured to perform various functionalities described in the present invention. The functionalities of the processors, any portions thereof, or any combinations of the processors provided herein can be implemented as software executed on platforms such as microprocessors, microcontrollers, DSPs, or other suitable platforms.

Software can be broadly construed as representing instructions, instruction sets, code, code segments, program code, programs, subprograms, software modules, applications, software applications, software packages, routines, subroutines, objects, execution threads, processes, functions, and the like. Software can reside on computer-readable media. Computer-readable media can include, for example, storage devices such as magnetic storage devices (e.g., hard drives, floppy disks, magnetic tapes), optical disks, smart cards, flash devices, random-access memory (RAM), read-only memory (ROM), programmable ROM (PROM), erasable PROM (EPROM), electrically erasable PROM (EEPROM), registers, or removable disks. Although storage is depicted as being separate from the processor in several aspects provided in the present invention, storage may also be located within the processor (e.g., cache or registers).

The above description is provided to enable any skilled person in the art to implement various aspects described in this document. The claims are not intended to be limited to the aspects shown in this document. Equivalent variations and modifications on the structures and functionalities of elements of the various aspects described in the present invention, known or yet to be known to those skilled in the art, will be covered by the claims of the present invention and fall within the scope of protection of the present invention.

**Claims**

1. A motion trajectory optimization apparatus (20) for a multi-object tracking system (100), comprising:

    an acquisition module (21) configured to obtain target object data from sensors perceiving multiple target objects;
    a tracking module (22) configured to track the target object data to obtain multiple motion trajectories for the multiple target objects, wherein each motion trajectory includes multiple detection results of a target object at multiple moments, wherein each detection result comprises: the target object's ID, detection timestamp, and various feature parameters, including one or more motion parameters and one or more geometric parameters; and
    an optimization module (23) configured to perform at least one of the following optimizations on the multiple motion trajectories:

        - optimization for motion trajectories containing potential global outlier detection results.
        - optimization for motion trajectories containing potential local outlier detection results, where the extent of deviation of local outlier detection results from the trajectory is smaller than the extent of deviation of global outlier detection results.
        - optimization for motion trajectories containing inconsistent geometric parameters.
        - optimization for motion trajectories containing potential ID-switching trajectory segments.

2. The motion trajectory optimization apparatus (20) as claimed in Claim 1, wherein optimization of a motion trajectory containing inconsistent geometric parameters comprises:

    assigning a distance confidence level to each detection result in a motion trajectory, wherein the closer the distance between the target object and the sensor, the higher the distance confidence level of the corresponding detection result;

calculating a total confidence level of the detection result based on the distance confidence level and perception confidence level of each detection result,

wherein the perception confidence level is based on sensor perception performance and included in target object data;

determining the optimal geometric parameters applicable to the motion trajectory based on the calculated total confidence level; and

replacing the geometric parameters in all detection results of the motion trajectory with the computed optimal geometric parameters.

3. The motion trajectory optimization apparatus (20) as claimed in Claim 2, wherein calculating the total confidence level of the detection result based on distance confidence level and perception confidence level of each detection result includes:

calculating the product, sum, or average of the distance confidence level and perception confidence level of each detection result as the total confidence level.

4. The motion trajectory optimization apparatus (20) for a multi-object tracking system of claim 2, wherein calculating the total confidence level comprises:

normalizing the distance confidence level and the perception confidence level separately; and multiplying the normalized distance confidence level and the normalized perception confidence level.

5. The motion trajectory optimization apparatus (20) for a multi-object tracking system of claim 2, wherein calculating the total confidence level comprises:

normalizing the distance confidence level and the perception confidence level separately; and adding the normalized distance confidence level and the normalized perception confidence level.

6. The motion trajectory optimization apparatus (20) for a multi-object tracking system of claim 2, wherein calculating the total confidence level comprises:

normalizing the distance confidence level and the perception confidence level separately; and calculating a weighted average of the normalized distance confidence level and the normalized perception confidence level.

7. The motion trajectory optimization apparatus (20) as claimed in Claims 2, 3, 4, 5, or 6, wherein determining the optimal geometric parameters based on the calculated total confidence level comprises:

determining the geometric parameters of the detection result with the highest total confidence level as the optimal geometric parameters; or calculating the optimal geometric parameters using a weighted averaging algorithm based on the geometric parameters and total confidence level of each detection result in the motion trajectory.

8. The motion trajectory optimization apparatus (20) for a multi-object tracking system of claim 2, 3, 4, 5, or 6, comprising:

obtaining a motion trajectory comprising multiple detection results, each detection result including geometric parameters and a total confidence level;

calculating optimal geometric parameters for the motion trajectory using a weighted averaging algorithm based on the geometric parameters and total confidence level of each detection result in the motion trajectory; and

replacing the geometric parameters in all detection results of the motion trajectory with the calculated optimal geometric parameters.

9. The motion trajectory optimization apparatus (20) for a multi-object tracking system of claim 8, wherein calculating the optimal geometric parameters comprises:

assigning a weight to each detection result based on its total confidence level;

multiplying the geometric parameters of each detection result by its assigned weight to obtain weighted geometric parameters;

summing the weighted geometric parameters across all detection results in the motion trajectory; and

dividing the sum of the weighted geometric parameters by the sum of all assigned weights to obtain the optimal geometric parameters.

10. The motion trajectory optimization apparatus (20) for a multi-object tracking system (100) of claim 1, wherein the trajectory optimization processing is implemented as offline processing.

11. The motion trajectory optimization apparatus (20) for a multi-object tracking system (100) of claim 10, wherein the offline processing comprises storing sensor-generated target object data in a memory and retrieving the target object data from the memory periodically or based on user requests or triggering signals for processing.

12. The motion trajectory optimization apparatus (20) for a multi-object tracking system (100) of claim 10, wherein the offline processing is non-real-time processing that is not performed simultaneously with sensor perception of target objects.

13. A multi-object tracking system (100), comprising:

perception devices including one or more sensors for perceiving multiple target objects and outputting target object data; and
the motion trajectory optimization apparatus (20) as claimed in any one of Claims 1-12, communicatively connected to the perception devices for tracking the target object data to obtain multiple motion trajectories of the target objects and optimizing the obtained motion trajectories.

14. A motion trajectory optimization method for a multi-object tracking system (100), optionally executed by the optimization apparatus (20) as claimed in any one of Claims 1-12 or by the multi-object tracking system (100) as claimed in Claim 13, the method comprising:

obtaining target object data containing multiple target objects perceived by sensors;
tracking the target object data to obtain multiple motion trajectories of the multiple target objects, where each motion trajectory includes multiple detection results of a target object at multiple moments, and each detection result includes: a target object ID, detection timestamp, and one or more feature parameters including one or more motion parameters and one or more geometric parameters; and
performing at least one of the following optimizations on the multiple motion trajectories:

- optimizing a motion trajectory containing potential global outlier detection results;
- optimizing a motion trajectory containing potential local outlier detection results, where the extent of deviation of local outlier detection results from the motion trajectory is smaller than the extent of deviation of global outlier detection results;
- optimizing a motion trajectory containing inconsistent geometric parameters; and
- optimizing a motion trajectory containing potential ID-switching trajectory segments.

15. A machine-readable storage medium storing executable instructions, wherein when executed, one or more processors perform the motion trajectory optimization method as claimed in Claim 14.

Fig. 1

Fig. 2

**TRAJECTORY_1**

TS: 0
L: 4.5m
W: 3m
H: 1.7m

TS: 1
L: 4.5m
W: 3m
H: 1.7m

TS: 2
L: 4.5m
W: 3m
H: 1.7m

TS: 3
L: 4.5m
W: 5m
H: 1.7m

LOCAL
OUTLIER

**FIG. 3A**

**TRAJECTORY_2**

TS: 0
L: 4.5m
W: 3m
H: 1.7m

TS: 1
L: 4.5m
W: 3m
H: 1.7m

TS: 2
L: 3m
W: 6m
H: 2m

GLOBAL
OUTLIER

TS: 3
L: 4.5m
W: 3m
H: 1.7m

**FIG. 3B**

**TRAJECTORY_3**

TS: 0
CS:0.1
L: 5m
W: 4m
H: 2m

TS: 1
CS: 0.2
L: 3.2m
W: 4m
H: 1.5m

TS: 2
CS: 0.3
L: 4.8m
W:
H:

TS: 3
CS: 0.5
L: 4.5m
W: 3.7m
H: 1.4m

**FIG. 3C**

TRAJECTORY_4

TRACKLET_3
CLASS: CAR

TRACKLET_1
CLASS: CAR

TRACKLET_2
CLASS: TRUCK

**Fig. 3D**

231

2311

2312

2313

2314

**Fig. 4**

232

| 2321 |
|------|

↓

| 2322 |
|------|

↓

| 2323 |
|------|

↓

| 2324 |
|------|

**Fig. 5**

X_LIST

**Fig. 6**

233

2331

2332

2333

2334

**Fig. 7**

TS: 0
CS:0.1
L: 5m
W: 4m
H: 2m

TS: 1
CS: 0.2
L: 3.2m
W: 4m
H: 1.5m

TS: 2
CS: 0.3
L: 4.8m
W:
H:

TS: 3
CS: 0.5
L: 4.5m
W: 3.7m
H: 1.4m

EGO

TS: 0
L: 4.5m
W: 3.7m
H: 1.4m

TS: 1
L: 4.5m
W: 3.7m
H: 1.4m

TS: 2
L: 4.5m
W: 3.7m
H: 1.4m

TS: 3
L: 4.5m
W: 3.7m
H: 1.4m

EGO

**Fig. 8**

234

```
┌─────────────────┐
│      2341       │
└─────────────────┘
         │
         ▼
┌─────────────────┐
│      2342       │
└─────────────────┘
         │
         ▼
┌─────────────────┐
│      2343       │
└─────────────────┘
```

**Fig. 9**

TRACKLET_1
CLASS: CAR

T1  P1  P2  P3

T2  T3

TRACKLET_2
CLASS: TRUCK

T4  TRACKLET_3
CLASS: CAR

**Fig. 10**

1100

```
┌─────────────────┐
│      1101       │
└─────────────────┘
         │
         ▼
┌─────────────────┐
│      1102       │
└─────────────────┘
         │
         ▼
┌─────────────────┐
│      1103       │
└─────────────────┘
```

**Fig. 11**